# EUROPEAN PATENT SPECIFICATION

(11) **EP 2 988 235 B1**
(45) Date of publication and mention of the grant of the patent: **19.09.2018**
(21) Application number: 15179238.9
(22) Date of filing: 14.03.2007
(51) Int. Cl.: G06F 19/00, H04N 21/2747, H04N 21/414, H04N 21/4223, H04N 21/61

(54) **VEHICLE EVENT RECORDING SYSTEMS HAVING PARALLEL COMMUNICATION LINKS**
SYSTEME ZUR AUFZEICHNUNG VON FAHRZEUGEREIGNISSEN MIT PARALLELEN KOMMUNIKATIONSVERBINDUNGEN
SYSTÈMES D'ENREGISTREMENT D'ÉVÉNEMENTS DE VÉHICULES AYANT DES LIAISONS DE COMMUNICATION PARALLÈLES

(30) Priority: 16.03.2006 US 377157
(43) Date of publication of application: 24.02.2016
(62) Divisional of application: 07753183.8
(73) Proprietor: Smartdrive Systems, Inc., San Diego, CA 92121 (US)
(72) Inventor: PLANTE, James, San Diego, CA California 92121 (US)
(74) Representative: Bell, James

(56) References cited:
- WO-A2-2006/022824
- CA-A1- 2 469 728
- DE-A1-102004 004 669
- DE-U1- 20 311 262
- GB-A- 2 402 530

## Description

### TECHNICAL FIELD

The present invention concerns a vehicle event recorder system. More particularly, the present invention concerns a vehicle event recorder system having parallel integrated communication ports for connecting to a network.

### BACKGROUND ART

Video surveillance systems are used to provide video records of events, incidents, and of other situation in locations of special interest. For example, retail banking offices are generally protected with video surveillance systems that provide video evidence in the event of robbery. While such video surveillance systems are typically used in fixed locations, mobile video surveillance systems are also commonly used today.

Certain video systems have been configured for use with automobiles, for example, with police cruisers. Because a police cruiser is frequently situated near the scene of an active crime, important imagery may be captured by video cameras installed on the police cruiser.

Activity of interest occurring near an automobile is not always associated with crime and criminals. Events to be recorded may occur in the proximity of an automobile, which are of interest for reasons unrelated to crime. For example, a traffic accident in which two cars collide may be valuable video evidence. Events and circumstances leading to the collision may be preserved to provide an accurate reconstruction of the accident and may be useful in determining cause, fault and liability. Therefore, the use of video systems related to automobiles is rapidly becoming a tool useful not only for fighting crimes, but also for the general protection of the public.

U.S. Patent No. 5,570,127 to Schmidt discloses a video recording system for a passenger vehicle, such as a school bus, having two video cameras, one providing an inside view of the bus and the other one providing a view of the traffic, a single recorder, and a system multiplexing the two cameras to the recording device at appropriate times. A switching signal determines which of the two video cameras communicates with the video recorder, so as to view passengers at certain times and traffic at other times.

U.S. Patent No. 5,586,130 to Doyle discloses a method and apparatus for detecting fault conditions in a vehicle data-recording device, in order to detect tampering or unauthorized access. The system includes vehicle sensors for monitoring one or more operational parameters of the vehicle. The fault detection technique contemplates storing a current time value at regular intervals during periods, in which the recording device is provided with a source of main power. US Patent No. 5,815,071 to Doyle discloses instead a method and apparatus for monitoring parameters of vehicle electronic control units.

U.S. Patent No. 5,815,093 to Kikinis discloses a computerized vehicle log, a vehicle accident recording system that employs a digital camera connected to a controller in nonvolatile memory, and an accident sensing interrupter. The oldest recorded images are overwritten by the newest images, until an accident is detected, at which time the memory is blocked from further overwrites to protect the more vital images that may include important information about the accident. In preferred embodiments, the system of the '093 patent includes a communication port for downloading stored images, after an accident, to a digital device capable of displaying the images. In particular, the '093 patent describes a wired download to a server having specialized image handling and processing software thereon.

U.S. Patent No. 6,002,326 to Turner discloses an antitheft device for an automotive vehicle having both an audible alarm and visual monitor system. Video monitor operators are responsible for monitoring and handling an emergency situation and informing an emergency station.

U.S. Patent No. 6,088,635 to Coz et al. discloses a vehicle accident video recorder, in particular, a railroad vehicle accident video recorder. In particular, the '635 patent teaches a method and a monitoring unit for recording the status of the railroad vehicle prior to a potential accident is presented. The monitoring unit continuously monitors the status of an emergency brake of the railroad vehicle and the status of a horn of the railroad vehicle. Video images are recorded and captured for a predetermined period of time after detecting that the emergency brake or horn blast has been applied as an event trigger.

U.S. Patent No. 6,185,490 to Ferguson discloses a video crash data recorder having a three-stage memory for recording and retaining information. This recorder is further equipped with serial and parallel connectors to provide instant on-scene access to accident data. The '490 patent also teaches on-site access to the data, and a wired connection in the form of a serial or parallel hardwire connectors. Other known vehicle event recorders provide for serial and parallel hardwire connections.

U.S. Patent No. 6,246,933 to Bague teaches a traffic accident data recorder and traffic accident reproduction system and method. Sensors for registering parameters related to vehicle operation include at least a vehicle mounted digital video camera and an audio recorder. A rewritable, nonvolatile memory stores processed operational parameters and video images and audio signals, which are provided by a microprocessor controller. Data is converted to a computer readable form and read by a computer, so that an accident can be reconstructed via the collected data.

U.S. Patent No. 6, 298, 290 to Abe et al. teaches a memory apparatus for vehicle information data. A plurality of sensors including a CCD camera, a speed sensor, a steering angle sensor, a brake pressure sensor, and an acceleration sensor are coupled to a control unit that passes information to a flash memory and a RAM memory subject to an encoder. The collected information travels through a video output terminal. The '290 patent illustrates another hardwire system and the importance placed by experts in the art on a computer hardware interface, partly because video systems are typically data intensive and wired systems have sufficient bandwidth sufficient for transferring large amounts of data.

U.S. Patent No. 6,333,759 to Mazzilli teaches a 360° automobile video camera system. A complex mechanical mount adjusts the viewing angle of a single camera, giving a 360° range for recording video inside and outside of an automotive vehicle.

U.S. Patent No. 6,389,339 to Just teaches a vehicle operation monitoring system and method. Operation of the vehicle is monitored with an onboard video camera linked to a radio transceiver. A monitoring service includes a cellular telecommunication network to enable viewing video data received from the transceiver at a home-base computer. The system of the '339 patent is aimed at parental monitoring of adolescent driving. The mobile modem is designed for transmitting live video information into the network as the vehicle travels.

U.S. Patent No. 6,411,874 to Morgan et al. discloses an advanced law enforcement and response technology, in which a central control system affords intuitive and easy control of numerous subsystems associated with a police car or other emergency vehicle. This highly integrated system includes advanced control apparatus that drive a plurality of detector systems, including video and audio systems distributed about the vehicle. A primary feature in the device of the '874 patent includes an advanced user interface and display system, which provides for high level driver interaction with the system.

U.S. Patent No. 6,421,080 to Lambert teaches a digital surveillance system with pre-event recording. Pre-event recording is important in accident recording systems, because recording of the accident generally happens after the accident has occurred. A first memory is used for temporary storage, and images are stored in the temporary storage continuously until a trigger is activated that indicates an accident has occurred, at which time images are transferred to a more permanent memory.

U.S. Patent Nos. 6,389,340, 6,405,112, 6,449,540, and 6,718,239 to Rayner teach systems that include cameras for automobiles capturing video images, both forward- and rear-looking, and for storing recorded images locally on a mass storage system. At the end of the vehicle service day, an operator puts a wired connector into a device port and downloads information into a desktop computer system having specialized application software, so that the images and other information can be played-back and analyzed with a highly integrated user display interface.

In the systems of the Rayner patents, an administrative operator cannot manipulate at an off-site location or otherwise handle the captured data without human intervention. A download operator must transfer data captured by the recorder unit device to a disconnected computer system. While proprietary "DriveCam" files according to the Rayner patents can be e-mailed or otherwise transferred through the Internet, those files are in a format which can only be processed and read by desktop software installed on a remote computer. Therefore, data captured by the vehicles is unavailable to certain parties without the specialized software that may have an interest in the data. A second and major disadvantage is of the Rayner systems is that a human operator must service the equipment each day with a manual download action.

Automobile systems having a wireless communication link component also are known.

U.S. Patent No. 6,459,988 to Fan et al. teaches methods and systems for detecting vehicle collision using a global positioning system (GPS). A GPS receiver is combined with wireless technology to automatically report an accident to a remotely located third party. A system uses the GPS signals to determine when an acceleration value exceeds the preset threshold, which is meant to be indicative of an accident having occurred.

U.S. 6,862,524 to Nagda et al. teaches systems for determining and disseminating traffic information or route information using location data. Traffic information is collected from mobile units that provide their location or position information and route information may be utilized to determine whether a mobile unit is allowed or prohibited from traveling along a certain route. Related systems are disclosed in U.S. Patent Nos. 6,529,159; 6,552,682; 6,594,576; 6,664,922; 6,795,017; 6,832,140; 6,867,733; 6,882,313, and 6,922,566, all assigned to @Road Inc.

U.S. Patent No 6,728,612 to Carver et al. discloses an automated telematics test system and method, in which a telematics system in a mobile vehicle provides for a test command from a test center to be made to a call center according to a test script. The mobile vehicle is continuously in contact by way of cellular communication networks with a remotely located host computer.

U.S. Patent No. 6,947,817 to Diem discloses a nonintrusive diagnostic tool for sensing oxygen sensor operation that includes a scheme or an oxygen analyzer deployed in a mobile vehicle communicating by way of an access point to a remotely located server. A diagnostic heuristic is used to analyze the data and confirm proper operation of the sensor. An analysis may be performed by a mainframe computer based on data received from the oxygen sensor.

Relationships between mobile vehicles and remote host computers have also been disclosed in US Patent Nos. 6,735,503; 6,739,078; 6,760,757; 6,810,362; 6,832,141; and 6,850,823.

U.S. Patent No. 6,928,348 to Lightner et al. discloses Internet based emission tests that are performed on vehicles having special wireless couplings to computer networks. Data may be transferred to entities of particular interest including the EPA or the California Air Resources Board, or to certain insurance companies and other organizations concerned with vehicle emissions and with the environment.

Other disclosures in the prior art relate to reporting automobile performance parameters to remote servers via wireless links. In these disclosures, an onboard data bus in an on board diagnostic (OBD) system is coupled to a microprocessor through a standard electrical connector. The microprocessor periodically receives data and transmits that data through the wireless communication system. For example, U.S. Patent No. 6,636,790 to Lightner et al. discloses methods and apparatus for remotely characterizing vehicle performance. OBD data is periodically received by a microprocessor and passed into a local transmitter at predetermined time intervals. Therefore, the '790 patent and related prior art does not provide for the processing and analyzing of data other than at the predetermined time periods. US Patent No. 6,732,031 to Lightner et al. also describes systems, in which where motor vehicles are coupled by wireless communication links to remote host servers.

U. S. Patent No. 6,947,817 to Diem discloses nonintrusive diagnostic tools for testing oxygen sensor operation with a diagnostic system. Such system includes a wireless communication link between a vehicle and a remote network of server computers. In particular, a WiFi type access points enables an analyzer to communicate through the Internet with a server computer hosting an oxygen sensor simple object access protocol (SOAP) service. With the system of the '817 patent, smog sensors for automobiles communicate with remote servers through a WiFi communication link.

WO 2006/022824 describes a multi-camera surveillance system.

DE 10 2004 004 669 describes a video sensing accident and damage occurrence detection system.

US 6,092,,008 describes ail in-flight event recording system

### DISCLOSURE OF THE INVENTION

A first aspect of the present invention provides a vehicle event recorder system according to claim 1.

Various examples provide a system for collecting vehicle fleet management data.

It is another example to provide a vehicle fleet management system having a video component.

It is still another example to provide a vehicle fleet management system that includes a high performance variable network connectivity and function.

It is still another example to provide a vehicle fleet management systems that includes a high performance network connectivity via parallel ports.

These and other examples are provided by a vehicle event recorder system having parallel integrated communication ports for connecting to a network. In a vehicle event recorder, a plurality of communication links are arranged in parallel and at any given time, the event recorder may switch among any of these links depending upon availability and bandwidth parameters.

Vehicle event recorders according to examples may be installed in motor vehicles, which are intrinsically highly mobile. These vehicle event recorders, including event recorders having imaging means, are arranged to monitor vehicle use and to collect images of scenes occurring in and/or around the vehicle, and also to monitor other performance and use parameters of the vehicle. These systems are also configured to collect data associated with a particular moment in time, or an "event," and to preserve that dataset for a post event review.

Vehicle event recorders according to examples link to a network for delivering information to a remote server. Depending on the relationship between the vehicle and a particular communication link, the availability and efficiency of the link changes. Event recorders according to examples are configured to switch between a plurality of links as link availability and efficiency changes.

In an example, a detailed or complete dataset is parsed and reduced into a data subset of reduced size, or an abbreviated dataset, which may be more easily transmitted on limited bandwidth systems. While the abbreviated dataset is transmitted through the network, the complete dataset is preserved locally for transmission at a later time when communication systems of higher bandwidth become available.

In one example, the vehicle event recorder is deployed with a wireless mobile telephone type communication network. A video camera, vehicle system transducers, and other measurement systems all operate to collect data during the use of a vehicle. Upon the occurrence of an event, for example, a traffic accident, data is captured and preserved in an onboard memory as an "event dataset." A parsing module extracts the most relevant information, which may be assembled as a dataset of reduced size.

In one example, a vehicle event recorder includes a video camera, a microprocessor, a memory, a parsing module, and at least two data communication links arranged in parallel.

### BRIEF DESCRIPTION OF THE DRAWINGS

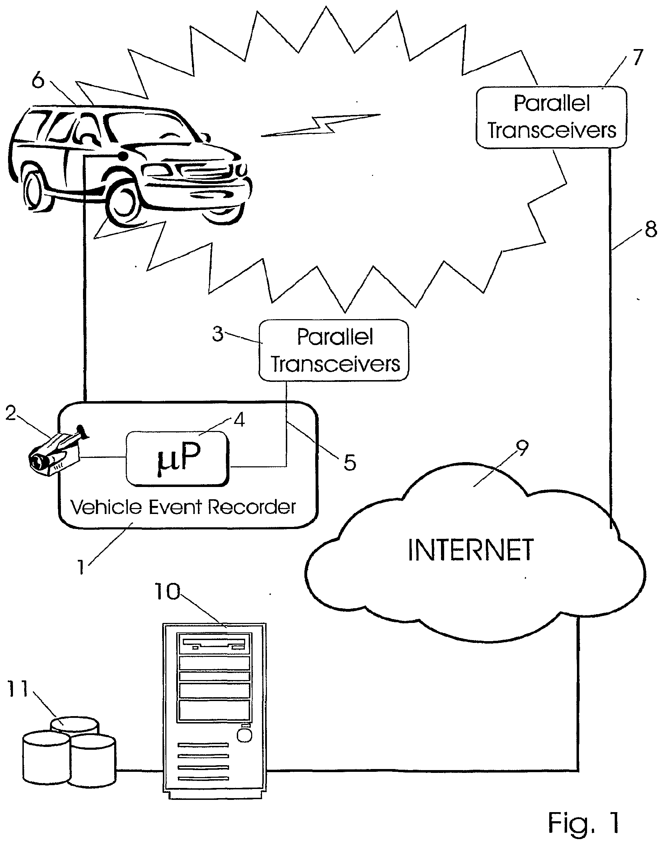

The drawings constitute a part of this specification and include exemplary embodiments of the invention, which may be embodied in various forms. It is to be understood that in some instances various aspects of the invention may be shown exaggerated or enlarged to facilitate an understanding of the invention. Figure 1 is a block diagram of a vehicle event recorder system according to the present invention.
Figure 2 is a block diagram of a vehicle event recorder system according to the present invention that illustrates the structure of the memory system.
Figure 3 illustrates three exemplary communication links for connecting a video event recorder according to the present invention to a wired network.
Figure 4 illustrates a membership authentication client/server in a video event recorder according to the present invention.

### MODES FOR CARRYING OUT THE INVENTION

Detailed descriptions of embodiments of the invention are provided herein. It is to be understood, however, that the present invention may be embodied in various forms. Therefore, the specific details disclosed herein are not to be interpreted as limiting, but rather as a representative basis for teaching one skilled in the art how to employ the present invention in virtually any detailed system, structure, or manner.

Throughout the present disclosure, reference is made to certain terms of art. The definitions provided hereinbelow should not be interpreted as limiting, but rather as representative to assist the reader in the understanding of the invention.

Cellular Wireless Communication Networks: Wireless networks having large coverage areas that include of a plurality of cells and "handoff' mechanisms for the nodes connecting one cell to another, in order to maintain a continuous connection. Where high speed data transfers are enabled, these cellular wireless networks are sometimes referred to as "3G" or "2.5G" mobile networks.

Physical Anomaly: Any change in a predetermined physical parameter outside the scope of normal operating conditions or above a predetermined threshold.

Managed Loop Memory: A memory system designed to preserve data captured during a period immediately before and immediately after a certain instant and to overwrite older data with newer data according to a predefined expiration definition, so to form a continuous loop overwrite scheme.

Vehicle Environment: The environments in and/or around a vehicle including those spaces inside and/or outside the car body. These includes spaces ahead of, behind, besides, and inside the driver compartment.

Gateway: A coupling for interfacing two independent communication systems, enabling a protocol used on a first system to be translated into a protocol used on a second system.

Communication Port: Means for supporting a data communication link that include a transceiver or a modem device and suitable connection apparatus. Examples are a mobile cellular transceiver, WiFi, WiMax (Worldwide Interoperability for Microwave Access), bluetooth, Ethernet, and serial communication ports such as USB, USB2, Firewire or RS-232, among others.

Vehicle fleet management strategy benefits greatly when video records related to vehicle use are made available. Known vehicle event recording systems include video cameras that capture images of environments in and around a vehicle during use but generate large amounts of image data. Systems for processing and transferring vehicle event records require architectures and system configurations that accommodate generation and transfers of such large amounts of data.

While memory schemes and memory management systems can be used to mitigate problems related to the handling of bulk data at the device head, special data transfer mechanisms must be provided when data is moved to external system nodes. Large video data files cannot be transmitted through networks in which bandwidth or data transfer capacity is inadequate.

Besides bandwidth, another major factor influencing system architecture is device use with respect to physical connectivity. When video event recorders are used in motor vehicles, those video recorders cannot be connected by wires to communication networks because motor vehicles are intrinsically highly mobile. Known wireless solutions are of limited use, because wireless systems generally have severe bandwidth limitations, which do not easily support data heavy applications. The newer wireless 3G networks are useful only for moderate bandwidth applications, and transmitting high resolution videos on wireless systems remains difficult, particularly in an upload direction.

The present invention concerns vehicle event recorders with integrated parallel communication ports for connecting to a network. A system architecture according to the present invention provides a vehicle event recording systems with configurations of data communication links that enable an improved processing of collected data, including at least partial real-time data transfers. A system architecture according to the present invention operates with the limited bandwidths available with different data communication links.

In general terms, a video event recorder according to the present invention may be described as a unit that includes a video camera, a microprocessor, and at least two communication ports. A communication network and a remote server computer may also be provided. The video camera has a field of view suitable for capturing views in and/or around the vehicle where the vehicle event recorder unit is installed. The camera output is directed to the microprocessor, which is electronically coupled to the communication ports, and the captured image data is transmitted to the network through any port or more than one port.

The video event recorder operates as a hybrid system, in which a large amount of event data is captured that include video images along with other vehicle operational data. This information is assembled into datasets suitable for transfer to remote servers via communication links, both wired and wireless.

Depending upon the spatial relationship of the vehicle with respect to the network at any given time, a communication link is selected among several possible communication links. A dataset or dataset version suitable for the available link's bandwidth is also selected. Accordingly, the instantaneous network architecture may change depending on the travel path of the vehicle, to accommodate and to best perform an efficient data transfer.

Three spatial conditions are of interest: first, a vehicle is garaged at or near an enclosed facility of limited extension; second, a vehicle is parked at a large fixed parking facility; and third, a vehicle is moving within a metropolitan area.

In the first case, a wire connection to a network is possible. A vehicle may be hardwire coupled via very high speed data link to a wired network.

In the second case, a vehicle may be within close range of a communication space served by a fixed wireless system such as an 802.11(x) or WiFi or WiMax type wireless system. The parked vehicle, while resting, may perform large data transfers, because the data transmission speeds attainable over a WiFi type connection may be high, although the space over which the link may be maintained may be limited to the size of a large parking facility and is not generally suitable for transceivers in motion.

In the third case, the vehicle moving about a city during regular service may form a mobile wireless connection through mobile cellular data networks, for example a 3G network. Limited data transfers are possible over very large regions (space) but the bandwidth does not support real-time high resolution video, so only abbreviated datasets may be transferred.

In the foregoing three cases, a vehicle event recorder unit, or head, may establish a suitable connection to the network with different connection configurations. Once the most suitable connection is established, a predetermined dataset is selected and used in conjunction with that type of connection. In certain cases, a dataset may be abbreviated to form a second dataset associated with an identical event, the first dataset being larger than the second one, the second one being transmitted in near real-time and the first one being stored locally for later transmission when a higher bandwidth communication link becomes available.

Based on the foregoing, the vehicle event recorder is configured with means for selecting an appropriate connection. A connection selection mechanism, or connection selector, is devised to analyze the current state of the system and determine a preferred connection type for that state. Generally speaking, the connection with the highest available bandwidth is preferred. A connection selector interrogates the parallel transceivers to determine which type of connection is available, if any. If it is determined that a wired connection is present, then the transceiver to be used is an Ethernet/standard network interface card or another similar type of modem/transceiver. The connection selector tests the network interface card to determine whether a communication link is established and present or otherwise operable. Upon detection of an established link, the microprocessor is queued to transmit all stored datasets including those having the largest size. One skilled in the art will appreciate that in this mode, only stored datasets are transmitted, because the vehicle is not in a state in which an event may be experienced.

If it is determined that a wired connection is not present, then a test is made to determine whether a fixed wireless communication link is present and available/operable, such as a WiFi, WiMax or other 802.11, 802.16, 802.20 fixed wireless type connection. Upon detection of an available fixed wireless communication link, the data selector sets into motion a data transfer appropriate for the bandwidth available for that link. Because large data files including those containing video series of data may easily be transmitted by WiFi systems, these connections generally accept complete downloads of all stored information. In some circumstances, a network manager may throttle the download. Where a large fleet of vehicles requires a quick turnaround at a shift change, each vehicle may be allocated only a limited download period. In this case, an abbreviated download scheme may become desirable, so that each vehicle transfers only the most critical data, the balance being preserved for a time when more transfer capacity becomes available.

When a vehicle is not garaged or in a wait state (i.e. parked), but rather is mobile and working, the network is only available via mobile wireless links of limited bandwidth. If it is determined that neither wired nor fixed wireless links are available, the system attempts to make a mobile wireless connection. Limited abbreviated datasets comprising the most critical data may be transmitted while the vehicle is in motion but, unlike the other types of connection, this connection may be structured so that it takes place not necessarily when a connection is possible, but rather only when needed (for example, after an accident).

Attempts to connect wirelessly are preferably made in response to an event having occurred. Because mobile wireless resources are limited, this type link is not generally left connected on a continuous basis but is established whenever a need arises. As such, vehicle event recorders according to the present invention are preferably arranged to establish such links only after an event has occurred, data relating to the event has been collected, a dataset has been formed and transferred to a buffer memory, and an abbreviated dataset has been developed, after which the abbreviated dataset can be transmitted over the mobile wireless link to the remote server. Upon return of the vehicle to the parking facility where a high bandwidth connection is again available, the entire or complete dataset associated with the captured event can be eventually downloaded to the server.

While the above described architecture initiates a mobile wireless communication connection in response to an event having occurred, fixed wireless links are established differently. When the vehicle event recorder enters a predetermined communication space, a carrier signal is detected and an indication is provided that suitable proximity has been achieved, then a network address is negotiated and a connection established. Thus, the act of a vehicle entering a communication space initiates this type of communication link, and connections to fixed wireless links are independent of events having occurred. Once a fixed wireless link is established, the entire memory of the memory buffer can be transferred to the server except under special circumstances.

In contrast, hardwire connections are not established with an automated system but rather are initiated manually whenever a connector is plugged into an appropriate socket. An operator may insert a USB plug to establish a hardwire connection. In some cases, a hardwire connection to a network is made through a standard network interface card installed as part of the vehicle event recorder system. In this configuration, an Ethernet connection/relationship is formed with the vehicle event recorder acting as a network node.

Consequently, through a hardwire port integrated with the vehicle event recorder head, administrators have a high speed access to all datasets collected and stored in the local memory systems of the vehicle event recorder.

During normal use of these systems, communication with the network may not be available. When no hardwire is connected, when the vehicle is outside the communication space of a fixed wireless system, and when a mobile wireless link cannot be established or is otherwise unavailable, the vehicle event recorder is isolated from the remote server. While such condition is temporary, it must be accounted for. Accordingly, when an event occurs during these times of isolation, data is collected and a complete dataset is formed, which is locally stored and maintained until contact with the network can be reestablished and the stored dataset can be transmitted to the server.

In the situation where a mobile wireless link first becomes available, this transfer may occur as an abbreviated dataset, followed later by a complete dataset. These two datasets may be associated with a single event, that is, one event may result in a first detailed and complete dataset being recorded, and in a second abbreviated dataset having only a subset of the data and suitable for early transmission.

These concepts will be better understood in view of the following description of the drawing figures. Figure 1 is a schematic diagram illustrating the combination of a vehicle event recorder coupled via parallel transceivers to a communication network, the Internet, and an application-specific server and database. In particular, a vehicle event recorder 1 is comprised of a video camera 2, a group of communication transceivers 3, arranged in parallel, and a microprocessor, microcontroller, or other computing platform 4. The video camera 2 is arranged to have a field of view that includes certain environments in and/or around vehicle 6, often a forward-looking field of view. A vehicle event recorder head may be installed behind a windshield, so that the camera sees the traffic road conditions ahead of the vehicle in which it is mounted. Video camera 2 runs continuously while vehicle 6 is in use, capturing images of scenes and activity occurring around vehicle 6. While video series are continuously captured, they are also continuously overwritten in a managed memory loop. When a predetermined amount of time has passed, a frame may be marked "expired" and subject to being discarded, as long as no event trigger occurs.

In the event of a traffic accident, a video series that includes frames from before and after the accident is captured by way of the memory management system and is further preserved for safekeeping in a memory buffer. Microprocessor 4, which is suitable for manipulating and sorting images and video image series, receives image data from video camera 2 through an electronic coupling thereto. Microprocessor 4 is further electronically coupled 5 to parallel communication transceivers 3, so that it can pass data to and from transceivers 3 and into the network to which transceivers 3 might be coupled.

A vehicle event recorder head unit may be installed in motor vehicle 6. Additional parallel transceivers 7 may be included, which complement transceivers 3 in the vehicle event recorder head. Transceivers 7 are electronically coupled 8 to a communication network, such as the public Internet 9, and further to remote server 10 and mass data storage 11. The coupling between the sets of parallel transceivers may be either wired or wireless. Depending upon the nature of the vehicle's state with respect to a connectivity medium, a set of preferred transceivers is selected at any given instant of time. As the vehicle changes its state, the selection of active transceivers may also change. Sometimes, the change in the selection of active transceivers is automated and sometimes is performed by a human operator manually. If a vehicle event recorder is unplugged from a hardwire connection, the vehicle may attempt to establish an alternative connection through fixed wireless means. If the vehicle leaves the communication space associated with a fixed wireless system, the vehicle may connect to a mobile wireless network.

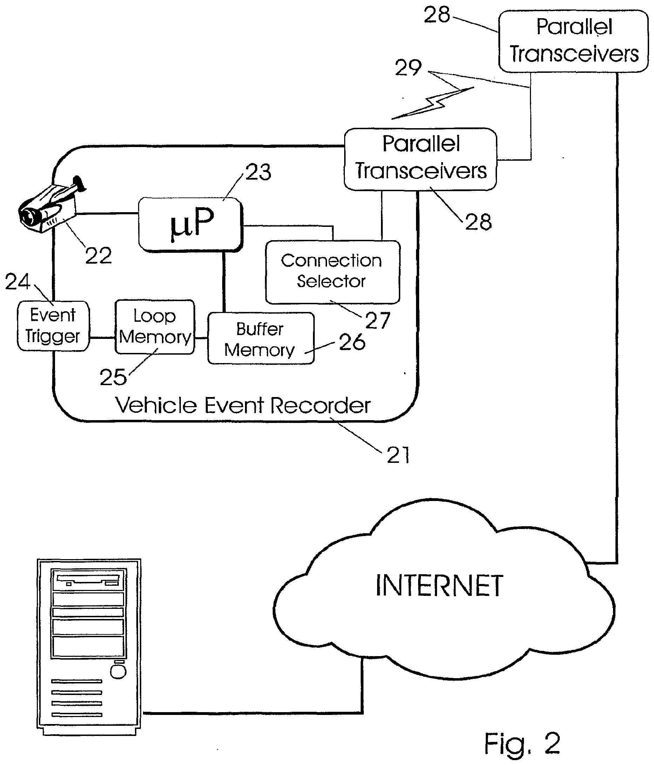

Figure 2 illustrates a vehicle event recorder 21 disposed within video camera 22 and including microprocessor 23. An event trigger 24 is provided in response to a physical anomaly, declaring the occurrence of an "event" according to a predetermined threshold. Upon indication that an event has occurred, data in a managed loop memory 25 is transferred to a buffer memory 26. A connection selector module 27 determines the state of the parallel transceivers and thus the availability of data communication connections. A connection of the highest available bandwidth is chosen and data is transferred accordingly. Datasets may be transmitted between complementary pairs of parallel receivers 28 either wirelessly or via wired connections 29. If no connections are available, a dataset remains in the buffer memory until a connection becomes available. If the first available connection is a low bandwidth mobile wireless connection, an abbreviated dataset is transmitted and a complete dataset remains in the buffer memory until a better connection becomes available.

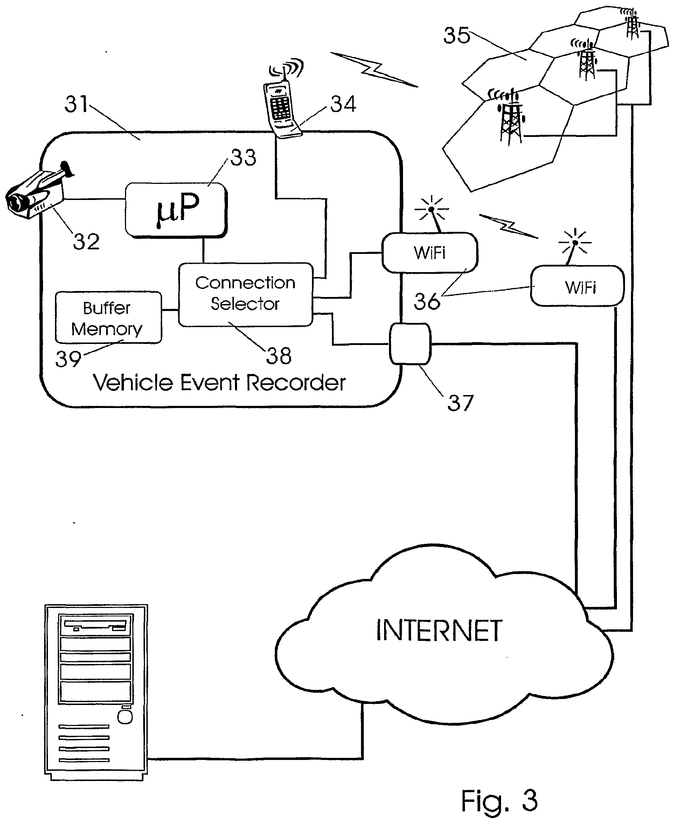

Preferred types of communication links are illustrated in Figure 3. A vehicle event recorder 31 that includes video camera 32 and microprocessor 33 has communication ports or transceivers disposed in parallel. A first communication transceiver is a cellular mobile wireless transceiver 34. Mobile telephone networks are well established, widely available, and highly reliable, providing ideal transmission means for vehicle computer-based systems and for communicating with remote servers, even when the vehicle is in service. A mobile telephone transceiver integrated with these types of vehicle event recorders provides network communication while a vehicle is in motion. While the bandwidth of these wireless systems is limited, they are widely available and the network coverage includes most metropolitan areas around the globe. Except for limits in the size of data transfer, such wireless links are highly suitable for mobile applications.

Different types of communication systems are included in other embodiments of the invention. Fleet vehicles are generally returned to a large parking facility at the end of a business day, which may be coupled to the communication space (coverage area) of a fixed wireless communication system. A WiFi or WiMax type link may be provided in the fleet vehicle parking facility, to form a cooperative download arrangement for the vehicle event recorders.

Vehicles returned to the such parking facility are automatically connected as they enter the communication space. Accordingly, certain embodiments of the invention incorporate different types of parallel transceivers, for example, a radio transceiver 36, a WiFi type device, or other 802.11, 802.16, or 802.20 type devices. When a vehicle enters the communication space of a fixed wireless system, for example, when a fleet vehicle returns to the designated parking facility at the end of a shift, the vehicle event recorder establishes a network connection and downloads data collected and stored in the memory buffer. Preferred embodiments of the invention include fixed wireless transmitters disposed in parallel with mobile wireless transmitters, so that either system may be used alternatively. Fixed wireless connections in these embodiments are not limited to WiFi or WiMax type communication links, but include other types of links such as Bluetooth, infrared, or other short range electromagnetic communication systems.

A wired network connections 37 may also be included. Ethernet or alternative wired connection schemes provide very high speed access to network resources and permit fast downloads of datasets collected throughout the service day of the vehicle. Accordingly, a vehicle event recorder comprising a set of parallel transceivers preferably includes transceivers that support wired type connections, for example, a standard network interface card adapted for Ethernet standards. Alternatively, USB, USB2, RS-232, or other wired type communication standards may be employed.

A dataset manager module may be included in the vehicle event recorder head, in particular, in the computing platform. A dataset manager manipulates data and forms discrete datasets in accordance with activity occurring in the system. For example, a dataset manager takes video data from the managed loop memory and associates it with other recorded data whenever an event trigger is activated in response to a physical anomaly. A dataset manager is also configured to parse a complete dataset to form abbreviated datasets. Key frames of a video series, time of day, parameters which exceed threshold values, etcetera may be assembled into a brief data-limited dataset, which may be transferred on moderate and low bandwidth connections. A dataset manager provides an arrangement of datasets in the vehicle event recorder head and is responsive to system states, events and conditions that may be sensed there.

A dataset manager may also be configured to provide limited reports at a timed interval despite no events having occurred. A "current status" dataset may be prepared with an "all systems normal" indication. The absence of such a report to the server may trigger appropriate responses, including special inquiries.

At the same time, a dataset manager may respond to requests from a remote administrator who wishes to "look-in" from time-to-time and check the current state of the system. In this situation, a dataset manager forms an appropriate answer fashioned as a dataset for transmission back to the inquiring administrator. Thus, a dataset manager is also responsive to manually initiated requests from outside parties.

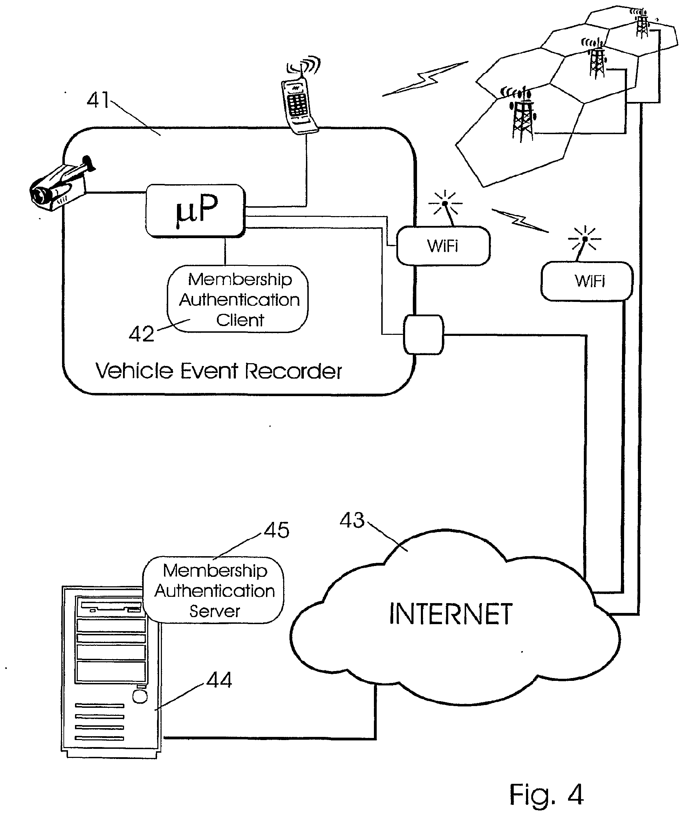

Embodiments of the present invention may also include means for identifying certain vehicle event recorders as a predefined group. Referring to Fig. 4, vehicle event recorder head 41 is provided with a membership authentication client 42. A communication through an open network such as the Internet 43 to an application specific server 44 requires that proper authority be established at a membership client/server 45. Vehicles belonging to a common fleet are maintained and managed as such because their membership is managed by the client/server 45 to associate them with a group and to provide appropriate permissions that regulate the behavior of the group members. Several groups or fleets independent of each other may share a single server and server provided web services.

While the invention has been described in connection with the above described embodiments, it is not intended to limit the scope of the invention to the particular forms set forth, but on the contrary, it is intended to cover such alternatives, modifications, and equivalents as may be included within the scope of the invention. Further, the scope of the present invention fully encompasses other embodiments that may become obvious to those skilled in the art and the scope of the present invention is limited only by the appended claims.

## Claims

1. A vehicle event recorder system comprising:
a server computer;
a vehicle event recorder comprising:
means arranged to monitor performance and use parameters of a vehicle;
a video camera (2, 22, 32) configured to capture image data, wherein the video camera has a field of view arranged to include an environment in and/or around the vehicle;
a managed loop memory (25) configured to electronically store information, wherein the information includes captured image data;
a buffer memory (26, 39) configured to electronically store information;
an event trigger (24) configured to declare an event in response to a physical anomaly based on the performance and use parameters of the vehicle;
two or more communication ports (3, 7, 28) configured to transfer information through a communication network to the server computer; and
a microprocessor (4, 23) configured to:
effectuate storage of captured image data in the managed loop memory,
detect the event declared by the event trigger,
create a first dataset based on the captured image data and the performance and use parameters of the vehicle,
responsive to detection of the event, transfer the first dataset to the buffer memory,
parse the first dataset to form a second dataset, wherein the first dataset includes a larger amount of data than the second dataset,
effectuate storage of the second dataset in the buffer memory,
facilitate transmission of the second dataset via a first communication port of the two or more communication ports to the server computer, and
facilitate transmission of the first dataset via a second communication port of the two or more communication ports to the server computer.

2. The vehicle event recorder system of claim 1, wherein the physical anomaly corresponds to a traffic accident.

3. The vehicle event recorder system of claim 1, wherein the first communication port supports a first communication link having a first bandwidth, and wherein the second communication port supports a second communication link, wherein the second communication link has a bandwidth greater than the first bandwidth.

4. The vehicle event recorder system of claim 1, wherein the physical anomaly corresponds to a particular moment in time, and wherein the first dataset includes captured image data prior to the particular moment in time.

5. The vehicle event recorder system of claim 1, wherein transmission of the second dataset is performed subsequent to transmission of the first dataset.

## Patentansprüche

1. Fahrzeugereignis-Aufzeichnungssystem umfassend:
einen Servercomputer,
eine Fahrzeugereignis-Aufzeichnungsvorrichtung umfassend:
Mittel, die angeordnet sind, um Leistungs- und Nutzungsparameter eines Fahrzeugs zu überwachen,
eine Videokamera (2, 22, 32), die dafür konfiguriert ist, Bilddaten zu erfassen, wobei die Videokamera ein Bildfeld aufweist, das derart angeordnet ist, dass es eine Umgebung in dem und/oder um das Fahrzeug herum enthält,
einen verwalteten Schleifenspeicher (25), der dafür konfiguriert ist, Informationen elektronisch zu speichern, wobei die Informationen erfasste Bilddaten enthalten,
einen Zwischenspeicher (26, 39), der dafür konfiguriert ist, Informationen elektronisch zu speichern,
einen Ereignisauslöser (24), der dafür konfiguriert ist, ein Ereignis in Reaktion auf eine physikalische Anomalie auf Grundlage der Leistungs- und Nutzungsparameter des Fahrzeugs zu deklarieren,
zwei oder mehr Kommunikationsanschlüsse (3, 7, 28), die dafür konfiguriert sind, Informationen durch ein Kommunikationsnetzwerk zu dem Servercomputer zu übertragen, und
einen Mikroprozessor (4, 23), der dafür konfiguriert ist:
das Speichern von erfassten Bilddaten in dem verwalteten Schleifenspeicher zu bewirken,
das Ereignis festzustellen, das von dem Ereignisauslöser deklariert wurde,
einen ersten Datensatz auf Grundlage der erfassten Bilddaten und der Leistungs- und Nutzungsparameter des Fahrzeugs zu erstellen,
in Reaktion auf das Feststellen des Ereignisses den ersten Datensatz zu dem Zwischenspeicher zu übertragen,
den ersten Datensatz zu parsen, um einen zweiten Datensatz zu bilden, wobei der erste Datensatz eine größere Menge an Daten als der zweite Datensatz enthält,
das Speichern des zweiten Datensatzes in dem Zwischenspeicher zu bewirken,
eine Übertragung des zweiten Datensatzes über einen ersten Kommunikationsanschluss der zwei oder mehr Kommunikationsanschlüsse zu dem Servercomputer zu unterstützen, und
eine Übertragung des ersten Datensatzes über einen zweiten Kommunikationsanschluss der zwei oder mehr Kommunikationsanschlüsse zu dem Servercomputer zu unterstützen.

2. Fahrzeugereignis-Aufzeichnungssystem nach Anspruch 1, wobei die physikalische Anomalie einem Verkehrsunfall entspricht.

3. Fahrzeugereignis-Aufzeichnungssystem nach Anspruch 1, wobei der erste Kommunikationsanschluss eine erste Kommunikationsverbindung unterstützt, die eine erste Bandbreite aufweist, und wobei der zweite Kommunikationsanschluss eine zweite Kommunikationsverbindung unterstützt, wobei die zweite Kommunikationsverbindung eine Bandbreite aufweist, die größer als die erste Bandbreite ist.

4. Fahrzeugereignis-Aufzeichnungssystem nach Anspruch 1, wobei die physikalische Anomalie einem bestimmten Zeitpunkt entspricht, und wobei der erste Datensatz erfasste Bilddaten vor dem bestimmten Zeitpunkt enthält.

5. Fahrzeugereignis-Aufzeichnungssystem nach Anspruch 1, wobei die Übertragung des zweiten Datensatzes auf die Übertragung des ersten Datensatzes folgend durchgeführt wird.

## Revendications

1. Système d'enregistreur d'événement de véhicule comprenant :
un ordinateur serveur ;
un enregistreur d'événement de véhicule comprenant :
des moyens agencés pour surveiller des paramètres de performance et d'utilisation d'un véhicule ;
une caméra vidéo (2, 22, 32) configurée pour capturer des données d'image, où la caméra vidéo a un champ de vision agencé pour inclure un environnement dans et/ou autour du véhicule ;
une mémoire en boucle gérée (25) configurée pour stocker électroniquement des informations, où les informations incluent des données d'image capturées ;
une mémoire tampon (26, 39) configurée pour stocker électroniquement des informations ;
un déclencheur d'événement (24) configuré pour déclarer un événement en réponse à une anomalie physique sur la base des paramètres de performance et d'utilisation du véhicule ;
deux ports de communication ou plus (3, 7, 28) configurés pour transférer des informations par l'intermédiaire d'un réseau de communication à l'ordinateur serveur ; et
un microprocesseur (4, 23) configuré pour :
effectuer le stockage de données d'image capturées dans la mémoire en boucle gérée,
détecter l'événement déclaré par le déclencheur d'événement,
créer un premier ensemble de données sur la base des données d'image capturées et des paramètres de performance et d'utilisation du véhicule,
en réponse à la détection de l'événement, transférer le premier ensemble de données à la mémoire tampon,
analyser le premier ensemble de données pour former un second ensemble de données, où le premier ensemble de données inclut une quantité de données plus grande que le second ensemble de données,
effectuer le stockage du second ensemble de données dans la mémoire tampon,
faciliter la transmission du second ensemble de données via un premier port de communication des deux ports de communication ou plus à l'ordinateur serveur, et
faciliter la transmission du premier ensemble de données via un second port de communication des deux ports de communication ou plus à l'ordinateur serveur.

2. Système d'enregistreur d'événement de véhicule selon la revendication 1, dans lequel l'anomalie physique correspond à un accident de la route.

3. Système d'enregistreur d'événement de véhicule selon la revendication 1, dans lequel le premier port de communication supporte une première liaison de communication ayant une première largeur de bande, et dans lequel le second port de communication supporte une seconde liaison de communication, dans lequel la seconde liaison de communication a une largeur de bande plus grande que la première largeur de bande.

4. Système d'enregistreur d'événement de véhicule selon la revendication 1, dans lequel l'anomalie physique correspond à un moment particulier dans le temps, et dans lequel le premier ensemble de données inclut des données d'image capturées avant le moment particulier dans le temps.

5. Système d'enregistreur d'événement de véhicule selon la revendication 1, dans lequel la transmission du second ensemble de données est effectuée à la suite de la transmission du premier ensemble de données.
